Europäisches Patentamt

(19) European Patent Office

Office européen des brevets

(11) Numéro de publication : **0 094 856**
**B1**

(12) # FASCICULE DE BREVET EUROPÉEN

(45) Date de publication du fascicule du brevet :
28.08.85

(51) Int. Cl.⁴ : **B 60 R   1/06**

(21) Numéro de dépôt : 83400857.5

(22) Date de dépôt : **29.04.83**

(54) Mécanisme à limiteur de couple pour la commande d'un miroir de rétroviseur.

(30) Priorité : 13.05.82 FR 8208347

(43) Date de publication de la demande :
23.11.83 Bulletin 83/47

(45) Mention de la délivrance du brevet :
28.08.85 Bulletin 85/35

(84) Etats contractants désignés :
DE GB IT

(56) Documents cités :
EP-A- 0 059 073
DE-A- 2 509 188
DE-A- 2 515 763
DE-A- 2 840 789
FR-A- 2 437 322
GB-A- 2 080 221
US-A- 4 202 603

(73) Titulaire : **Manzoni, Stéphane**
**1, rue Pasteur**
**F-39200 Saint-Claude (FR)**

(72) Inventeur : **Manzoni, Stéphane**
**1, rue Pasteur**
**F-39200 Saint-Claude (FR)**

(74) Mandataire : **Moulines, Pierre et al**
**Cabinet BEAU de LOMENIE 55, rue d'Amsterdam**
**F-75008 Paris (FR)**

Jouve, 18, rue St-Denis, 75001 Paris, France

## Description

La présente invention a pour objet un mécanisme à limiteur de couple pour la commande d'un miroir à rétroviseur.

Il est connu par le brevet britannique GB-A-2 080 221 d'utiliser un dispositif de commande d'un miroir de rétroviseur pour véhicules, dans lequel le miroir est fixé sur un organe de support monté pivotant suivant deux axes perpendiculaires sur une chape solidaire d'un boîtier monté dans une coupelle. Il est connu par le brevet français FR-A-2 437 322 un dispositif où le boîtier renferme deux pignons entraînés en rotation par des organes moteurs, lesdits pignons présentant un trou central taraudé dans lequel est engagée une partie filetée d'un élément tubulaire solidaire d'organes de commande articulés sur la face arrière de l'organe de support du miroir afin de communiquer à celui-ci un mouvement de pivotement suivant les deux axes perpendiculaires.

Dans ce dispositif, les pignons étant entraînés en rotation par des moteurs électriques, il est nécessaire de prévoir un dispositif limiteur de couple pour permettre au filetage des organes de commande de se dégager du taraudage des pignons lorsqu'un effort est appliqué axialement sur les organes de commande en poussant ou en tirant, notamment lorsque le miroir vient en butée en fin de course.

Par ailleurs, dans ce dispositif, les pignons sont montés sur la platine au moyen d'une vis et d'une rondelle et ceci ne permet pas d'obtenir en permanence un alignement de l'axe du pignon et de l'axe de l'organe de commande d'où il résulte une résistance mécanique importante. Ce mode de liaison présente également l'inconvénient de comporter un jeu axial qui, même très faible, engendre des vibrations du miroir et donne des images tremblées.

Il est également connu par le brevet français FR-A-2 437 322 un dispositif de commande de miroir, dans lequel on a aussi recherché un alignement de l'axe de la transmission de la commande.

Cependant, ce mode de réalisation nécessite des tolérances de fabrication extrêmement serrées entre les différents éléments. Ces éléments présentant des tolérances rigoureuses sont nombreux et comprennent des roues à vis sans fin qui sont montées à l'intérieur des boîtiers supérieur et inférieur pour permettre la rotation des vis en appui sur le fond du boîtier inférieur par un fond hémisphérique et par une surface de glissement de forme correspondante à une surface courbe située sur la partie inférieure des vis. Il en résulte donc de grandes difficultés de fabrication.

Conformément à la présente invention, la partie tubulaire à partie filetée des organes de commande est réalisée en un matériau déformable et présente au moins une fente axiale débouchant à l'extrémité dudit élément tubulaire qui est engagée dans le trou central taraudé du pignon, de telle sorte qu'un effort appliqué axialement sur l'organe de commande permet au filetage de se dégager radialement du taraudage, et les pignons sont montés sur le fond du boîtier au moyen d'une rotule maintenue élastiquement, de telle sorte que les organes de commande sont toujours dans l'alignement de l'axe des pignons d'entraînement.

Cette disposition est obtenue en raison de l'alignement automatique dû à la possibilité de mouvement de la rotule dans son palier élastique sur le fond du boîtier, ce qui supprime les résistances mécaniques et procure une fiabilité accrue dans la transmission. Lors de la commande du porte-miroir, le désengrènement entre la vis sans fin et la roue tangente étant extrêmement faible, cela ne nuit pas à la transmission.

Par ailleurs, cette disposition permet la suppression de la rondelle et de la vis et un gain de temps au montage, ce qui procure un abaissement du coût de fabrication. En effet, la mise en place de la rotule s'effectue en exerçant une force de pression sur celle-ci qui assure l'écartement élastique des organes flexibles du palier, et le maintien de la rotule sans jeu lorsque lesdits organes flexibles reviennent en place élastiquement, permettant néanmoins la rotation de la rotule lors de la commande du mouvement du porte-miroir.

Enfin, il est difficile lors de la fabrication de réaliser un assemblage libre et sans jeu axial de la roue tangente ou pignon en raison des tolérances à observer pour la cote du fond de boîtier et de l'épaulement de la roue tangente ou pignon monté rotatif dans un palier.

Or, dans tout mécanisme de commande du porte-miroir, le jeu axial même très faible de la transmission engendre des vibrations du miroir et donne des images tremblées. D'une part, la partie tubulaire à partie filetée des organes de commande est élastique et en appui sur le filetage intérieur des pignons, ce qui procure un montage sans jeu. D'autre part, le montage de la rotule dans son palier sur le fond du boîtier inférieur présente une résistance d'arrachement axial beaucoup plus importante que celle du limiteur de couple formé par la partie filetée en prise avec le filetage intérieur des pignons, de telle sorte que, lorsqu'un appui est exercé sur le porte-miroir, le limiteur de couple se libère.

Il en résulte que le dispositif perfectionné suivant l'invention peut fonctionner librement, sans jeu et avec un rattrapage de jeu fourni par les éléments élastiques dont il est composé.

Cette disposition suivant l'invention permet de réaliser un dispositif limiteur de couple qui est très simple et efficace, sans entraîner un encombrement supplémentaire dans le mécanisme.

D'autres caractéristiques et avantages de l'invention seront mieux compris à la lecture de la description qui va suivre de plusieurs modes de réalisation et en se référant aux dessins annexés, sur lesquels :

la figure 1 est une vue extérieure du mécanisme de commande d'un miroir de rétroviseur ;

la figure 2 est une vue en élévation et en coupe suivant la ligne II-II de la figure 3 du mécanisme de commande du miroir, le couvercle supérieur étant enlevé côté de l'un des moteurs ;

la figure 3 est une vue en coupe suivant la ligne III-III de la figure 2 et une coupe de la partie inférieure du couvercle du boîtier ;

la figure 4 est une vue en élévation et en coupe du dispositif limiteur de couple et du moyen de montage d'un pignon sur le fond du boîtier ;

la figure 5 est une vue en élévation et en coupe d'une variante de réalisation de la figure 4.

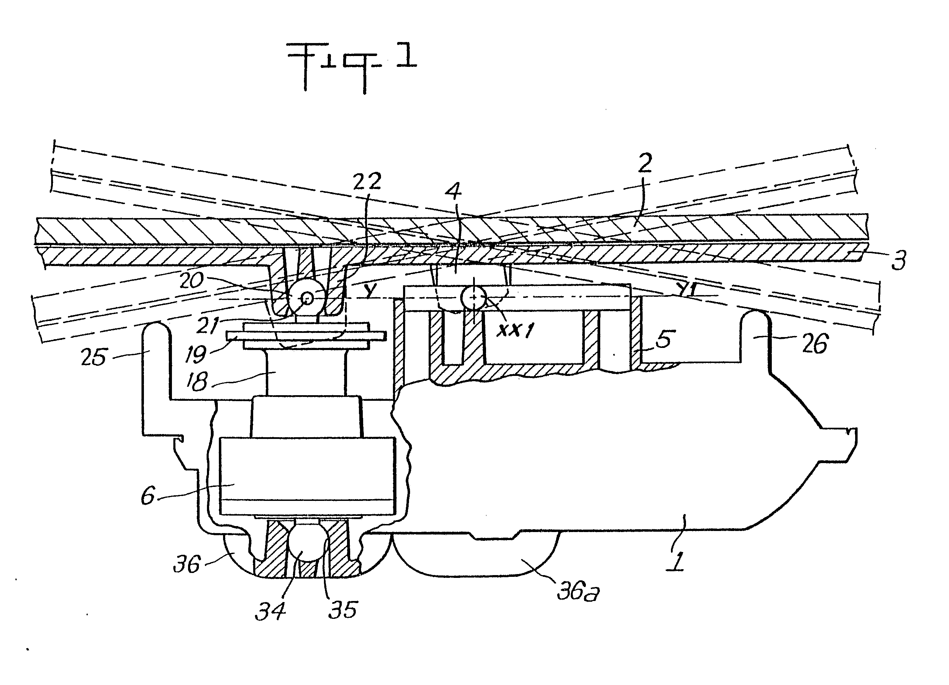

Aux figures 1, 2 et 3, on a représenté un mode de réalisation d'un dispositif de commande d'un miroir de rétroviseur pour véhicules, ledit dispositif comprenant une coupelle non représentée dans laquelle est monté, de façon connue, un boîtier 1 sur lequel est agencé de façon orientable suivant deux axes perpendiculaires XX1 et YY1 un miroir 2 fixé sur un organe de support 3, présentant deux pattes 4, par lequel ledit support est monté pivotant autour de l'axe XX1 qui est relié par des moyens connus à l'axe YY1 et à une chape 5 du boîtier 1.

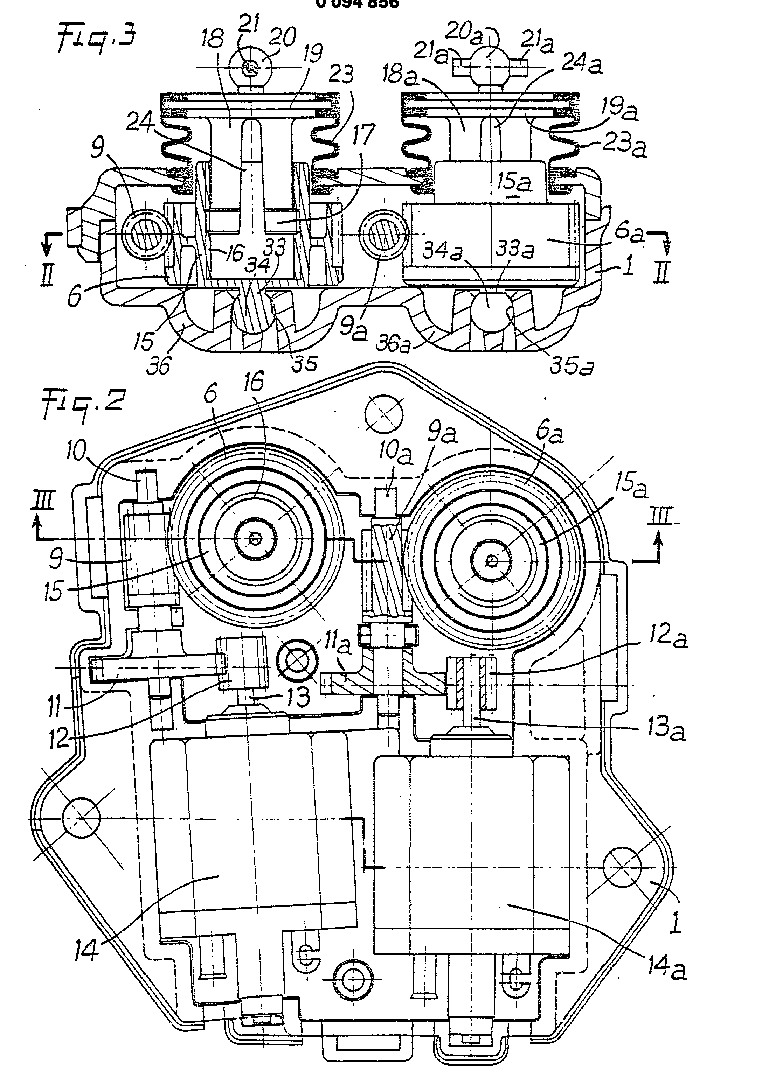

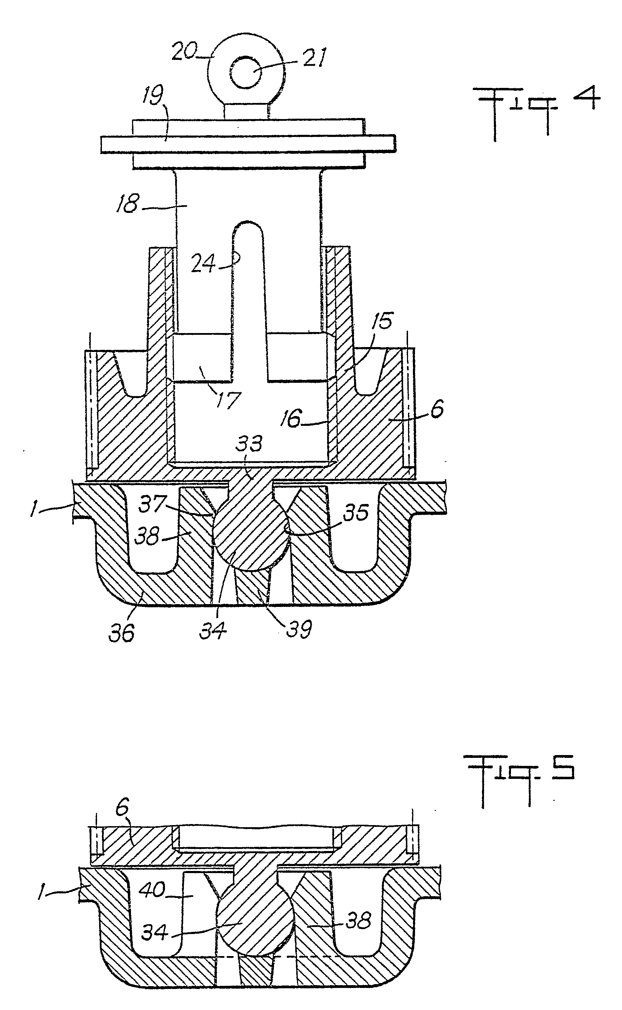

Dans le boîtier 1 (figures 2 et 3), sont montés rotatifs deux roues tangentes ou pignons 6, 6a qui sont prolongés d'un côté par une tige 33, 33a portant un organe sphérique ou rotule 34, 34a qui est montée librement dans un palier sphérique 35, 35a de forme correspondante ménagé dans un bossage 36, 36a prévu dans le fond du boîtier 1. Le palier sphérique tel que 35 (figure 4) est délimité par une cheminée 38 en matière déformable et le fond 39 du bossage 36, ladite cheminée présentant une lèvre 37 constituant le bord de l'ouverture de la cheminée par laquelle est engagé l'organe sphérique ou rotule 34.

Pour procéder au montage des roues tangentes ou pignons 6, 6a, il suffit d'engager à force par poussée l'organe sphérique 34 dans le palier 35 en déformant la lèvre 37 qui, après engagement de l'organe sphérique 34, vient recouvrir élastiquement celui-ci et le maintenir en place sans jeu dans son logement.

Pour obtenir un rattrapage de jeu sur la rotule 34, il est possible de munir la cheminée 38 de fentes longitudinales telles que 40 (figure 5).

Les roues tangentes ou pignons 6, 6a (figures 2 et 3) engrènent extérieurement avec des vis sans fin ou pignons 9, 9a fixés sur des axes 10, 10a portant des pignons 11, 11a engrenant avec des pignons 12, 12a calés à l'extrémité des arbres moteurs 13, 13a de moteurs électriques 14, 14a fixés sur le fond du boîtier.

Les roues tangentes ou pignons 6, 6a présentent un bossage central 15, 15a comportant un trou taraudé 16, dans lequel est engagée une partie filetée 17 d'une partie tubulaire 18, 18a d'un organe de commande dont le fond 19, 19a porte une rotule 20, 20a munie de tétons 21, 21a et qui est engagée dans un logement sphérique correspondant ménagé dans un bossage 22 prévu sur la face arrière de l'organe de support 3.

Le fond 19, 19a des organes de commande est relié par des soufflets déformables 23, 23a au bord d'ouvertures ménagées dans le boîtier 1 pour le passage des organes de commande.

Les parties tubulaires 18, 18a des organes de commande sont réalisées en un matériau déformable, notamment en matière plastique, et présentent des fentes axiales 24, 24a débouchant à l'une des extrémités de la partie tubulaire, afin de conférer à ladite partie tubulaire une possibilité de déformation radiale permettant qu'un effort appliqué axialement à l'un des organes de commande entraîne un dégagement du filetage 17 de la partie taraudée du trou 16.

Lorsque l'un des moteurs tels que 14 fonctionne, il entraîne en rotation par l'intermédiaire des pignons 12, 11 et de la vis sans fin 9 la roue tangente 6. La rotation de la roue tangente 6, 6a est transformée en déplacement linéaire par le trou taraudé 16 et la partie filetée 17 de l'organe de commande 18, 18a, 19, 19a qui, par sa rotule 20 ou 20a, transmet le mouvement au miroir 2 qui se déplace sélectivement autour des axes XX1 et YY1 suivant que l'un ou l'autre des moteurs 14, 14a est mis sous tension. Lorsque l'organe de support 3 du miroir vient en appui contre l'une des butées 25, 26 en fin de course d'une rotation autour notamment de l'axe XX1 et que le moteur 14 ou 14a continue à tourner, il se produit un effort axial sur l'organe de commande 18 ou 18a qui provoque le dégagement de l'organe de commande de la roue tangente pour éviter une détérioration de l'un des organes.

Par ailleurs, la disposition suivant l'invention permet, en raison du montage des roues tangentes 6, 6a au moyen de rotules 34 sur le boîtier 1, d'obtenir que l'axe de l'organe de commande 18 soit toujours dans l'alignement de la roue tangente ou pignon 6, 6a quelle que soit la position du miroir

Bien entendu, l'invention n'est pas limitative et l'homme de l'art pourra y apporter des modifications sans sortir pour cela du domaine de l'invention.

## Revendications

1. Mécanisme à limiteur de couple pour la commande d'un miroir de rétroviseur pour véhicules, dans lequel le miroir (2) est fixé sur un organe de support (3) monté pivotant suivant deux axes perpendiculaires (XX1, YY1), sur une chape (5) solidaire d'une platine montée dans le boîtier (1), ladite platine supportant deux pignons (6, 6a) montés sur le fond du boîtier et entraînés en rotation par des organes moteurs (13, 13a), lesdits pignons (6, 6a) présentant un trou central taraudé dans lequel est engagée une partie filetée (17) d'un élément tubulaire (18) solidaire d'organes de commande articulés sur la face arrière de l'organe de support (3) du miroir (2) afin de communiquer à celui-ci un mouvement de pivotement suivant les deux axes perpendiculaires (XX1, YY1), caractérisé en ce que l'élément tubulaire (18) est réalisé en un matériau déformable et présente au moins une fente (24) axiale débouchant à l'extrémité dudit élément tubulaire (18), qui est engagée dans le trou central taraudé du pignon (6, 6a), de telle sorte qu'un effort appliqué axialement sur l'organe de commande permet au filetage (17) de se dégager radialement du taraudage (16), et en ce que les pignons (6, 6a) sont montés sur le fond du boîtier (1) au moyen d'une rotule (34, 34a) maintenue élastiquement, de telle sorte que les organes de commande (18, 18a) sont toujours dans l'alignement de l'axe des pignons d'entraînement.

2. Mécanisme suivant la revendication 1, caractérisé en ce que la rotule est constituée d'un organe sphérique (34) solidaire du pignon (6) qui est engagé à force dans un palier sphérique (35) déformable disposé dans un bossage (36) conformé dans le fond du boîtier (1).

3. Mécanisme suivant la revendication 2, caractérisé en ce que le palier sphérique (35) est délimité par une cheminée (38) en matière déformable et le fond (39) du bossage (36), ladite cheminée (38) présentant une lèvre (37) entourant le bord de l'ouverture de la cheminée (38) par laquelle est engagée la rotule (34).

4. Mécanisme suivant la revendication 3, caractérisé en ce que le palier (35) comporte un moyen de rattrapage de jeu constitué par des fentes longitudinales (40) ménagées dans la paroi de la cheminée (38).

## Claims

1. Torque limiting device for the control of vehicles rearview mirror, in which the mirror (2) is secured on a support member (3) mounted for pivoting about two perpendicular axes (XX1, YY2), on a cover (5) integral with a plate mounted in the casing (1), said plate supporting two pinions (6, 6a) mounted on the bottom of the casing and driven in rotation by driving members (13, 13a), said pinions (6, 6a) having a central tapping in which is engaged a threaded part (17) of a tubular element (18) integral with control members hinged on the rear face of the mirror (2) support member (3) in order to impart thereto a pivoting movement in the direction of the two perpendicular axes (XX1, YY2), characterized in that the tubular element (18) is constituted in a deformable material and at least has one axial slot (24) issuing at the end of said element which is engaged in the central tapping of the pinion (6, 6a) so that any force applied axially on the control member enables the thread (17) to be radially released from the tapping (16), and in that the pinions (6, 6a) are mounted on the bottom of the casing (1) by means of a swivel joint (34, 34a) elastically held in position, so that the control members (18, 18a) are always in alignment with the axis of the driving pinion.

2. Mechanism according to claim 1, characterized in that the swivel joint is constituted by a spherical member (34) integral with the pinion (6) which is force-fitted into a deformable spherical bearing (35) disposed in a boss (36) shaped in the bottom of the casing (1).

3. Mechanism according to claim 2, characterized in that the spherical bearing (35) is defined by a shaft (38) in deformable material and the bottom (39) of the boss (36), said shaft (38) having a lip (37) surrounding the opening edge of the shaft (38) through which the swivel (34) is engaged.

4. Mechanism according to claim 3, characterized in that the bearing (35) comprises clearance compensation means constituted by longitudinal slots (40) provided in the shaft (38) wall.

## Patentansprüche

1. Mechanismus zur Momentenbegrenzung für die Steuerung eines Spiegels für Fahrzeuge, bei dem der Spiegel (2) an einem Tragorgan (3) befestigt ist, das um zwei zueinander senkrechten Achsen (XX1, YY1) schwenkbar an einem Aufbau (5) gelagert ist, der mit einer im Gehäuse (1) eingebauten Platte fest verbunden ist, wobei die Platte zwei Zahnräder (6, 6a) trägt, die auf dem Boden des Gehäuses drehbar gelagert sind und durch Antriebsorgane (13, 13a) gedreht werden, wobei die Zahnräder (6, 6a) eine zentrale Gewindebohrung haben, in die ein Gewindeteil (17) eines rohrförmigen Elements (18) eingesetzt ist, das mit Steuerorganen verbunden ist, die auf der Rückseite des Tragorgans (3) des Spiegels angelenkt sind, um auf diesen eine Schwenkbewegung um die beiden zueinander senkrechten Achsen (XX1, YY1) zu übertragen, dadurch gekennzeichnet, daß das rohrförmige Element (18) aus einem verformbaren Material hergestellt ist und wenigstens einen axialen Schlitz (24) aufweist, der am Ende des rohrförmigen Elements (18) mündet, das in die zentrale Gewindebohrung des Zahnrads (6, 6a) eingesetzt ist, und zwar derart, daß eine auf das Steueorgan axial ausgeübte Kraft eine radiale Freigabe des Außengewindes (17) aus dem Innengewinde ermöglicht, und daß die Zahnräder (6, 6a) auf dem Boden des Gehäuses (1) mittels einer elastisch gehaltenen Gelenkkugel (34, 34a) derart gelagert sind, daß die Steuerorgane (18, 18a) stets mit der Achse der Antriebszahnräder fluchten.

2. Mechanismus nach Anspruch 1, dadurch gekennzeichnet, daß die Gelenkkugel aus einem mit dem Zahnrad (6) einstückig ausgebildeten sphärischen Organ besteht, das unter Kraftanwendung in ein verformbares sphärisches Lager (35) eingesetzt ist, das sich in einem im Boden des Gehäuses (1) ausgebildeten Vorsprung (36) befindet.

3. Mechanismus nach Anspruch 2, dadurch gekennzeichnet, daß das sphärische Lager (35) durch einen Schacht (38) aus verformbarem Material und den Boden (39) des Vorsprungs (36) gebildet ist, wobei der Schacht (38) eine Lippe (37) aufweist, die den Rand der Öffnung des Schachts (38) umgibt, durch die die Gelenkkugel (34) eingesetzt ist.

4. Mechanismus nach Anspruch 3, dadurch gekennzeichnet, daß das Lager (35) eine Spielnachstelleinrichtung aufweist, die durch Längsschlitze (40) gebildet ist, die in der Wand des Schachts (38) ausgebildet sind.

Fig. 1

Fig.3

Fig.2

0 094 856

Fig. 4

Fig. 5

3